Europäisches Patentamt

European Patent Office

Office européen des brevets

(11) Veröffentlichungsnummer: **0 276 861 B1**

## EUROPÄISCHE PATENTSCHRIFT

(45) Veröffentlichungstag der Patentschrift: **22.04.92**

(51) Int. Cl.5: **B01D 17/12**, B01D 17/025, E03F 5/16

(21) Anmeldenummer: **88101258.7**

(22) Anmeldetag: **28.01.88**

(54) **Leichtflüssigkeitsabscheider mit selbsttätigem Abschluss.**

(30) Priorität: **28.01.87 DE 3702482**

(43) Veröffentlichungstag der Anmeldung:
**03.08.88 Patentblatt 88/31**

(45) Bekanntmachung des Hinweises auf die
Patenterteilung:
**22.04.92 Patentblatt 92/17**

(84) Benannte Vertragsstaaten:
**AT BE CH DE ES FR GB GR IT LI LU NL SE**

(56) Entgegenhaltungen:
EP-A- 0 037 855   EP-A- 0 037 886
EP-A- 0 047 535   EP-A- 0 118 021
AT-B- 378 946    DE-A- 2 838 559
DE-C- 546 058    US-A- 2 568 309
US-A- 2 609 099

(73) Patentinhaber: **Hammerschmitt, Nikolaus**
**Kölner Strasse 138**
**W-5350 Euskirchen(DE)**

(84) Benannte Vertragsstaaten:
**BE CH DE ES FR GB GR LI LU NL SE AT**

(73) Patentinhaber: **PROGRESS AG**
**J.-Durst-Strasse 100**
**I-39042 Brixen(IT)**

(84) Benannte Vertragsstaaten:
**IT**

(72) Erfinder: **Hammerschmitt, Nikolaus**
**Kölner Strasse 138**
**W-5350 Euskirchen(DE)**
Erfinder: **PROGRESS AG**
**J.-Durst-Strasse 100**
**I-39042 Brixen(IT)**

(74) Vertreter: **Dipl.-Ing. H. Hauck, Dipl.-Ing. E.**
**Graalfs, Dipl.-Ing. W. Wehnert, Dr.-Ing. W. Dö-**
**ring**
**Mörikestrasse 18**
**W-4000 Düsseldorf 30(DE)**

## Beschreibung

Die vorliegende Erfindung betrifft einen Leichtflüssigkeitsabscheider mit einem Zulauf für ein Leichtflüssigkeits/Schwerflüssigkeitsgemisch, einer Abscheidekammer zur Trennung des Gemisches, einem in einen Auslauf führenden Ablauf für die Schwerflüssigkeit aus der Abscheidekammer und einem selbsttätigen Abschluß für den Schwerflüssigkeitsablauf, der sich schließt, wenn der Schwerflüssigkeitsspiegel in der Abscheidekammer ein bestimmtes Niveau unterschreitet.

Leichtflüssigkeitsabscheider werden heutzutage überall dort eingesetzt, wo Leichtflüssigkeiten, insbesondere Öl, Benzin, nicht in das öffentliche Gewässernetz eingeleitet werden dürfen. Im Abscheider wird die Leichtflüssigkeit von der Schwerflüssigkeit, in der Regel Wasser, getrennt, so daß die gereinigte Schwerflüssigkeit über den Auslauf des Abscheiders ins Kanalnetz oder ein offenes Gewässer abgeleitet werden kann.

Eine Bauart von derartigen Leichtflüssigkeitsabscheidern, die sehr weit verbreitet ist, besitzt keinen speziellen Leichtflüssigkeitsablauf, sondern die von der Schwerflüssigkeit getrennte Leichtflüssigkeit sammelt sich in der Abscheidekammer an und wird periodisch von dort abgesaugt bzw. abgepumpt. Damit hierbei die sich ansammelnde Leichtflüssigkeit, deren Säule in der Abscheidekammer mit zunehmendem Zufluß immer größer wird, nicht in den Schwerflüssigkeitsablauf und somit den zum Kanalnetz führenden Auslauf des Abscheiders gelangen kann, sind derartige Abscheider mit einem selbsttätigen Abschluß für den Schwerflüssigkeitsablauf versehen, der sich schließt, wenn der Schwerflüssigkeitsspiegel in der Abscheidekammer ein bestimmtes Niveau unterschreitet bzw. die sich in der Abscheidekammer aufbauende Leichtflüssigkeitssäule eine bestimmte Höhe überschreitet. Ein derartiger selbsttätiger Abschluß besteht in der Regel aus einem auf der Schwerflüssigkeit schwimmenden Schwimmer, der über ein Gestänge mit einer den Schwerflüssigkeitsablauf verschließenden Klappe versehen ist. Im Betrieb des Abscheiders schwimmt der Schwimmer auf der Schwerflüssigkeit. Sinkt durch zunehmende Leichtflüssigkeitsablagerung der Schwerflüssigkeitsspiegel in der Abscheidekammer bis auf ein bestimmtes Niveau ab, so sinkt auch der Schwimmer und die mit diesem verbundene Abschlußklappe ab, die schließlich den Schwerflüssigkeitsablauf verschließt. Durch weiteren Zufluß des Leichtflüssigkeits/Schwerflüssigkeitsgemisches hebt sich die Klappe nicht mehr vom Ablauf ab, da die auf der Klappe lastende Schwerflüssigkeitssäule den entsprechenden Auftrieb übersteigt. Der Abschluß bleibt somit geschlossen, so daß sich durch das zufließende Gemisch der Leichtflüssigkeitsspiegel in der Abscheidekammer immer mehr anhebt, bis er schließlich die Kammer ausfüllt. Die Leichtflüssigkeit muß dann sofort abgesaugt werden, um den Abscheider wieder betriebsbereit zu machen. In vielen Fällen wird jedoch der richtige Zeitpunkt zum Absaugen versäumt, so daß die Leichtflüssigkeitssäule die Abscheidekammer nach oben hin vollständig ausfüllt und sich einen Weg zum Austritt aus der Kammer sucht. Da bei derartigen Abscheidern gemäß den vorhandenen Vorschriften die Deckel wegen der vorhandenen Explosionsgefahr nur lose aufliegen dürfen, kann die Leichtflüssigkeit somit aus dem Deckel austreten und in das benachbarte Erdreich eindringen. Es besteht ferner die Gefahr, daß die Leichtflüssigkeit in den Einstiegsschacht eindringt, mit dem derartige Abscheider versehen sind. Derartige Einstiegsschächte sind in der Regel aus Betonringen hergestellt, die übereinandergesetzt sind. Es ist hierbei nicht möglich, die aneinanderstoßenden Ringe ganz dicht zu halten, so daß beim Eindringen von Leichtflüssigkeit in den Einstiegsschacht die Gefahr besteht, daß die Leichtflüssigkeit in das benachbarte Erdreich einsickert. Auch können sich Rückstaus im Zulauf ergeben, so daß auch hier bei mangelnder Dichtigkeit Leichtflüssigkeit in das Erdreich eindringen kann.

Bei derartigen Abscheidern, die mit einem selbsttätigen Abschluß für den Schwerflüssigkeitsablauf versehen sind, besteht daher die Gefahr, daß bei geschlossenem Abschluß und angestauter Leichtflüssigkeit in der Abscheidekammer Leichtflüssigkeit aus dem Abscheider treten kann und zwar inbesondere dann, wenn durch große Mengen an zufließender Schwerflüssigkeit die Leichtflüssigkeit bei geschlossenem Abschluß in der Abscheidekammer nach oben gedrückt wird.

In neuerer Zeit sind jedoch auch Leichtflüssigkeitsabscheider entwickelt worden, bei denen die Leichtflüssigkeit nicht mehr periodisch abgesaugt bzw. abgepumpt werden muß, sondern die einen speziellen, insbesondere selbst tätigen Leichtflüssigkeitsablauf aufweisen. Bei derartigen Abscheidern wird die Leichtflüssigkeit durch die durch das zufließende Gemisch verursachte Pumpwirkung selbsttätig über einen Leichtflüssigkeitsablauf aus der eigentlichen Abscheidekammer entfernt. Hierbei besteht daher nicht die Gefahr, daß sich zuviel Leichtflüssigkeit in der Abscheidekammer ansammelt und dabei in das den Abscheider umgebende Erdreich dringt. Es kann jedoch bei derartigen Abscheidern zu Störungen des selbsttätigen Ölablaufs kommen, beispielsweise Blockierungen irgendwelcher Art, so daß dann ebenfalls die Gefahr besteht, daß zuströmende Schwerflüssigkeit die in der Abscheidekammer vorhandenen Leichtflüssigkeit aus dem Abscheider herausdrückt, wenn der selbsttätige Abschluß des Schwerflüssigkeitsablaufs dieser Abscheider geschlossen ist.

Der Erfindung liegt die Aufgabe zugrunde, einen Leichtflüssigkeitsabscheider der angegebenen Art zu schaffen, bei dem bei geschlossenem Abschluß des Schwerflüssigkeitsablaufs bei zufließender Schwerflüssigkeit keine Leichtflüssigkeit aus dem Abscheider ins Erdreich gedrückt wird.

Diese Aufgabe wird erfindungsgemäß durch einen Leichtflüssigkeitsabscheider der angegebenen Art gelöst, der dadurch gekennzeichnet ist, daß die Abscheidekammer in ihrem unteren Bereich einen zusätzlichen, immer offenen Schwerflüssigkeitsablauf aufweist, der in eine mit einem zum Auslauf führenden Überlauf versehene, von der Abscheidekammer getrennte Schwerflüssigkeitskammer mündet.

Während bei den vorstehend beschriebenen herkömmlich ausgebildeten Leichtflüssigkeitsabscheidern bei geschlossenem selbsttätigen Abschluß somit durch die sich bis zur Einlaufhöhe (Erdoberfläche) anstauende Schwerflüssigkeit die in der Abscheidekammer gespeicherte Leichtflüssigkeit aus dem Abscheider und somit in das umgebende Erdreich gedrückt wird, wird bei dem erfindungsgemäß ausgebildeten Leichtflüssigkeitsabscheider durch den zusätzlichen, immer offenen Schwerflüssigkeitsablauf die Schwerflüssigkeit in der Abscheidekammer bei geschlossenem selbsttätigen Abschluß nur so hoch angestaut, daß die gespeicherte Leichtflüssigkeit in der Abscheidekammer verbleibt und nicht in das den Abscheider umgebende Erdreich gelangen kann. Die Schwerflüssigkeit kann nämlich auch bei geschlossenem selbsttätigem Abschluß aus der Abscheidekammer in eine spezielle Schwerflüssigkeitskammer fließen und von dort über den vorgesehenen Überlauf in den Auslauf für die Schwerflüssigkeit strömen. Dadurch, daß der zusätzliche Schwerflüssigkeitsablauf im unteren Bereich der Abscheidekammer angeordnet ist, wird verhindert, daß Leichtflüssigkeit mit durch den zusätzlichen Schwerflüssigkeitsablauf geführt wird. Um diesen Effekt zu verstärken, ist der zusätzliche Schwerflüssigkeitsablauf zweckmäßigerweise tiefer als der mit dem selbsttätigen Abschluß versehene Schwerflüssigkeitsablauf bzw. an der tiefsten Stelle der Abscheidekammer angeordnet.

In der speziell vorgesehenen, von der Abscheidekammer getrennten Schwerflüssigkeitskammer kann sich die Schwerflüssigkeit bis zum Überlauf anstauen. Der Überlauf ist dabei vorzugsweise so hoch angeordnet, daß die auf der Schwerflüssigkeit in der Abscheidekammer befindliche Leichtflüssigkeit noch von der Abscheidekammer aufgenommen wird. Mit anderen Worten, wenn die Kante des Überlaufs in der speziellen Schwerflüssigkeitskammer den höchstmöglichen äußeren Schwerflüssigkeitsspiegel darstellt, so liegen entsprechend der Dichte der Leichtflüssigkeit, für die hier ein Wert von 0,85 angenommen wird, 15 % der Leichtflüssigkeitsschicht über und 85 % der Schicht unter dem äußeren Schwerflüssigkeitsspiegel, d. h. der Überlaufkante. Durch Festlegung der Überlaufkante läßt sich somit unter Berücksichtigung der Tatsache, daß die Leichtflüssigkeitssäule in der Abscheidekammer nicht zu weit nach unten dringen darf, die Kapazität der Abscheidekammer bestimmen.

Der durch die Erfindung erzielte Effekt läßt sich am besten in Verbindung mit einer Beschreibung der Funktionsweise des erfindungsgemäßen Leichtflüssigkeitsabscheiders erläutern. Über den Zulauf fließt ein Leichtflüssigkeits/Schwerflüssigkeitsgemisch in die Abscheidekammer ein. Beim Durchfließen der Abscheidekammer trennt sich die Leichtflüssigkeit von der Schwerflüssigkeit und steigt an die Oberfläche. Auf dem verdrängten Schwerflüssigkeitsspiegel in der Abscheidekammer befindet sich ein Schwimmer, an dem eine Abschlußklappe hängend angeordnet ist (selbsttätiger Abschluß), die zum Schließen des Schwerflüssigkeitsablaufs aus der Abscheidekammer dient. Erreicht der nach unten verdrängte Schwerflüssigkeitsspiegel in der Abscheidekammer ein bestimmtes Grenzniveau, dann ist der Schwimmer so weit abgesunken, daß die Abschlußklappe den Schwerflüssigkeitsablauf schließt. Zufließendes Gemisch würde sich dann in der Abscheidekammer stauen, fließt jedoch jetzt durch den zusätzlichen Schwerflüssigkeitsablauf ab und verläßt über den Überlauf die spezielle Schwerflüssigkeitskammer. Insofern kann sich die Schwerflüssigkeit in der Abscheidekammer nur noch so hoch stauen, wie dies durch den äußeren Schwerflüssigkeitsspiegel, d. h. die Überlaufkante, vorgegeben ist.

Diese Überlaufkante stellt abgesehen von den durchgangsabhängigen Schwerflüssigkeitsspiegelschwankungen den höchstmöglichen äußeren Schwerflüssigkeitsspiegel dar. Will man den Abscheider bei geschlossenem selbsttätigen Abschluß in Betrieb halten, bis der Schwerflüssigkeitsinhalt entsorgt ist, muß die Überlaufkante im Bereich des Zulaufquerschnittes liegen, um einen Leichtflüssigkeitsstau im Zulaufrohr zu vermeiden. Soll der Abscheider bei geschlossenem Abschluß betriebsfähig bleiben, dann ist auch der Schwerflüssigkeitsspiegel im Ruhestand, d. h. der Auslauf, entsprechend tiefer anzuordnen.

Bei einer speziellen Ausführungsform der Erfindung weist der Leichtflüssigkeitsabscheider zwei zusätzliche Schwerflüssigkeitsabläufe auf, die mit ihren Schwerflüssigkeitskammern und Überläufen beiderseits des mit dem selbsttätigen Abschluß versehenen Schwerflüssigkeitsablaufes angeordnet sind. Bei dieser Ausführungsform liegen somit symmetrische Verhältnisse vor, wobei die gegenüberliegenden Überläufe gegensinnig überströmt werden und die Schwerflüssigkeit dabei in den Auslauf bzw. eine dem Auslauf vorgeordnete Kammer gelangt. Unabhängig davon, ob zwei Überläufe oder nur ein einziger Überlauf vorgesehen sind, sollten die entsprechenden Überlaufkanten möglichst lang ausgebildet sein, um gleichmässigere Strömungsverhältnisse sowie eine Verringerung der Schwerflüssigkeitsschwankungen zu erzielen. Bei einer speziellen Ausführungsform der Erfindung sind daher die beiden speziellen Schwerflüssigkeitskammern, die beiderseits des mit dem selbsttätigen Abschluß versehenen Schwerflüssigkeitsablaufes vorgesehen sind, nach oben hin in Richtung auf die Abscheidekammer erweitert, so daß sich verlängerte Überlaufkanten ergeben.

Weitere Ausführungsformen der Erfindung gehen aus den Unteransprüchen hervor.

Die Erfindung wird nachfolgende anhand von Ausführungsbeispielen in Verbindung mit der Zeichnung im einzelnen er läutert. Es zeigen:

Figur 1 eine erste Ausführungsform eines Leichtflüssigkeitsabscheider in drei Ansichten, nämlich einem Längsschnitt A-A, einem Querschnitt C-C, einem Horizontalschnitt B-B und einem Teilhorizontalschnitt D-D;

Figur 2 eine zweite Ausführungsform eines Leichtflüssigkeitsabscheiders in den ersten drei Schnittansichten der Figur 1;

Figur 3 eine dritte Ausführungsform eines Leichtflüssigkeitsabscheiders in den ersten drei Schnittansichten der Figur 1; und

Figur 4 eine vierte Ausführungsform eines Leichtflüssigkeitsabscheiders in den ersten drei Schnittansichten der Figur 1.

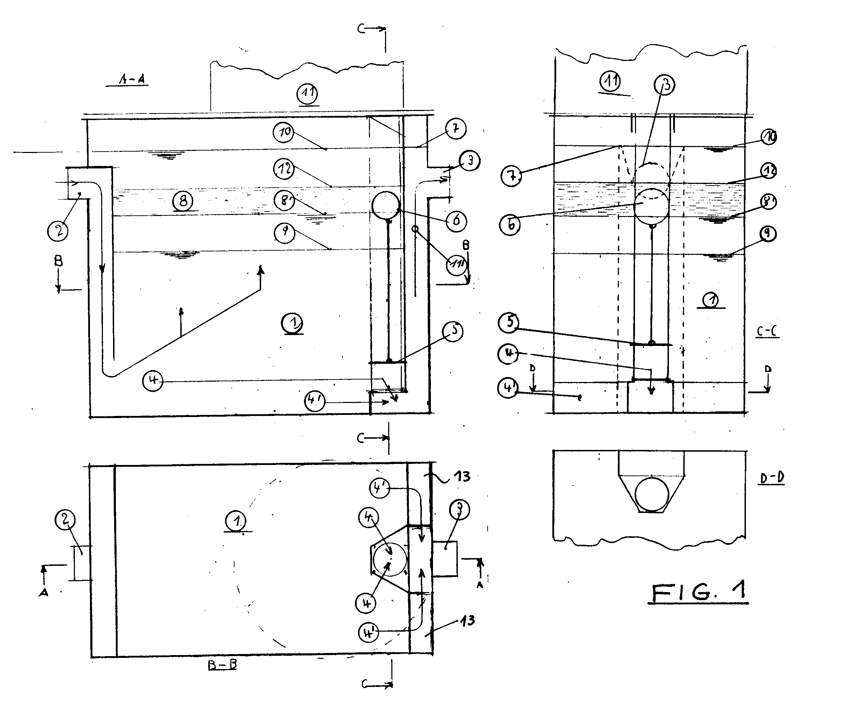

Der in Figur 1 dargestellte Leichtflüssigkeitsabscheider besitzt eine Abscheidekammer 1, einen Zulauf 2 für ein Leichtflüssigkeits/Schwerflüssigkeitsgemisch und einen Auslauf 3 für die von der Leichtflüssigkeit gereinigte Schwerflüssigkeit. Das Leichtflüssigkeits/Schwerflüssigkeitsgemisch fließt über den Zulauf 2 in die Abscheidekammer 1 ein. Beim Durchfließen der Abscheidekammer 1 trennt sich die Leichtflüssigkeit von der Schwerflüssigkeit und steigt an die Oberfläche. Eine entsprechende Leichtflüssigkeitsschicht ist bei 8 angedeutet. Die Abscheidekammer 1 besitzt einen zum Auslauf 3 führenden Schwerflüssigkeitsablauf 4, der im unteren Bereich der Kammer angeordnet ist. Der Ablauf 4 führt über eine Vorkammer 11' zum Schwerflüssigkeitsauslauf 3, der beispielsweise in das Kanalnetz mündet.

Wie man insbesondere dem Schnitt C-C der Figur 1 entnehmen kann, ist der Schwerflüssigkeitsablauf 4 mit einem selbsttätigen Abschluß 5 versehen, der eine Abschlußklappe aufweist, welche über eine Stange mit einem auf dem Schwerflüssigkeitsspiegel 8' schwimmenden Schwimmer 6 versehen ist. Wenn der Schwerflüssigkeitsspiegel in der Abscheidekammer 1 weiter absinkt, schließt sich der Ablauf 4 allmählich und wird durch die Klappe ganz geschlossen, wenn der Schwerflüssigkeitsspiegel bis auf den bei 9 gezeigten Stand abfällt. Wenn ein solcher Zustand erreicht ist, kann somit keine Schwerflüssigkeit mehr aus der Abscheidekammer abfließen. Der selbsttätige Abschluß verhindert somit, daß bei einer zu großen Leichtflüssigkeitssäule in der Abscheiderkammer die Gefahr eines Mitführens von Leichtflüssigkeit in den Schwerflüssigkeitsauslauf 3 besteht.

Wie man insbesondere dem Schnitt B-B der Figur 1 entnehmen kann, ist beiderseits der dem Auslauf 3 vorgeordneten Vorkammer 11' eine spezielle Schwerflüssigkeitskammer 13 vorgesehen, die jeweils über einen zusätzlichen, immer offenen Schwerflüssigkeitsablauf 4' (Sicherheitsablauf), der am Boden des Abscheiders angeordnet ist, mit der Abscheidekammer 1 in Verbindung steht. Das bedeutet, daß auch bei geschlossenem selbsttätigen Abschluß 5 Schwerflüssigkeit aus der Abscheidekammer 1 über den zusätzlichen Ablauf 4' in die spezielle Schwerflüssigkeitskammer 13 fließen kann. Jede Schwerflüssigkeitskammer 13 besitzt einen Überlauf 7, über den die Schwerflüssigkeit aus der Kammer in die Vorkammer 11' und von dort in den Auslauf 3 fließen kann. Die Kante des Überlaufs 7 bestimmt - abgesehen von den durchgangsabhängigen Schwerflüssigkeitsspiegelschwankungen - den höchstmöglichen äußeren Schwerflüssigkeitsspiegel bei geschlossenem Abschluß 5, der bei 10 angedeutet ist. Dieser äußere Schwerflüssigkeitsspiegel 10 ist durch den Überlauf 7 so angeordnet, daß in der Abscheidekammer 1 noch ausreichend Raum für die Aufnahme einer ausreichend hohen Leichtflüssigkeitssäule verbleibt, d. h., daß der bei 12 angedeutete Leichtflüssigkeitsspiegel nicht die Höhe des Deckels des Abscheiders erreicht bzw. in den bei 11 angedeuteten Einstiegsschacht dringt und damit das umgebende Erdreich verunreinigt. Beim Schließen des selbsttätigen Abschlusses 5 würde sonst der Schwerflüssigkeitsspiegel angehoben. Der Durchfluß setzt sich jedoch über die zusätzlichen Abläufe 4' und die höher liegenden Überläufe 7 fort und verhindert damit, daß die gespeicherte Leichtflüssigkeit aus der Abscheidekammer gedrückt wird. Der Abscheiderinhalt kann somit in Ruhe abgesaugt und entsorgt werden.

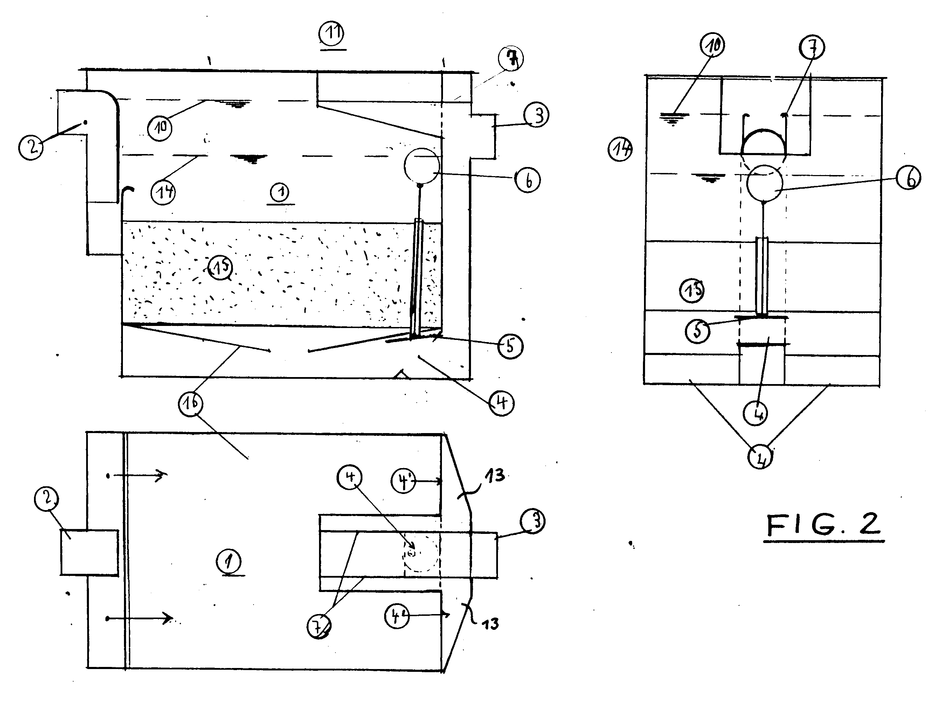

Figur 2 zeigt in drei Schnitten eine weitere Ausführungsform eines Leichtflüssigkeitsabscheiders. Der Abscheider ist ebenfalls mit einem Zulauf 2, einer Abscheidekammer 1 und einem Auslauf 3 für die Schwerflüssigkeit versehen. Für gleiche Teile sind gleiche Bezugszeichen wie in Figur 1 verwendet. Bei diesem Ausführungsbeispiel ist der Boden der Abscheidekammer 1 als schiefe Ebene 16 ausgebildet, in deren Mitte ein Schwerflüssigkeitsdurchlauf angeordnet ist. Desweiteren ist die Abscheidekammer im unteren Bereich mit Füllkörpern 15 gefüllt, die den Abscheidungseffekt verstärken. Auch bei diesem Ausführungsbeispiel ist ein selbsttätiger Abschluß 5 vorgesehen, der einen Schwerflüssigkeitsablauf 4 aus der Abscheidekammer 1 verschließt, wenn der Schwerflüssigkeitsspiegel in der Kammer 1 eine entsprechende Tiefe erreicht hat. Bei dieser Ausführungsform besitzt der selbsttätige Abschluß 5 eine einseitig gelenkig gelagerte Abschlußklappe, in deren Mitte etwa eine Stange angelenkt ist, an deren oberen Ende sich ein Schwimmer 6 befindet. Durch die Füllkörper 15 erstreckt sich ein Rohr, durch das die Stange geführt ist.

Der entsprechende Schnitt B-B zeigt am besten die Anordnung des Schwerflüssigkeitsablaufs 4, der mit dem selbsttätigen Abschluß 5 versehen ist. Dieser Ablauf mündet in eine Vorkammer, die wie bei dem Ausführungsbeispiel der Figur 1 zum Auslauf 3 führt. Auch bei diesem Ausführungsbeispiel sind wiederum zwei zusätzliche Schwerflüssigkeitsabläufe 4' beiderseits des Ablaufes 4 angeordnet, die in spezielle Schwerflüssigkeitskammern 13 münden. Wie insbesondere im Schnitt A-A dargestellt ist, erweitern sich diese Kammern 13 im oberen Bereich in Richtung auf die Abscheidekammer 1 schräg aufwärts, so daß die entsprechenden Überläufe 7, die in die Vorkammer führen, entsprechend länger ausgebildet sind. Durch die Verlängerung dieser Ablaufschleuse (doppelseitig) werden die durchgangsabhängigen Schwerflüssigkeitsspiegelschwankungen verringert, d. h. die Strömungsverhältnisse werden vergleichmäßigt. Bei gleichzeitigem Anheben des Zulaufs 2 wird ein Leichtflüssigkeitsstau vor dem Zulauf verhindert. Der Abscheider bleibt betriebsbereit. Im übrigen funktioniert der Abscheider der Figur 2 wie der der Figur 1.

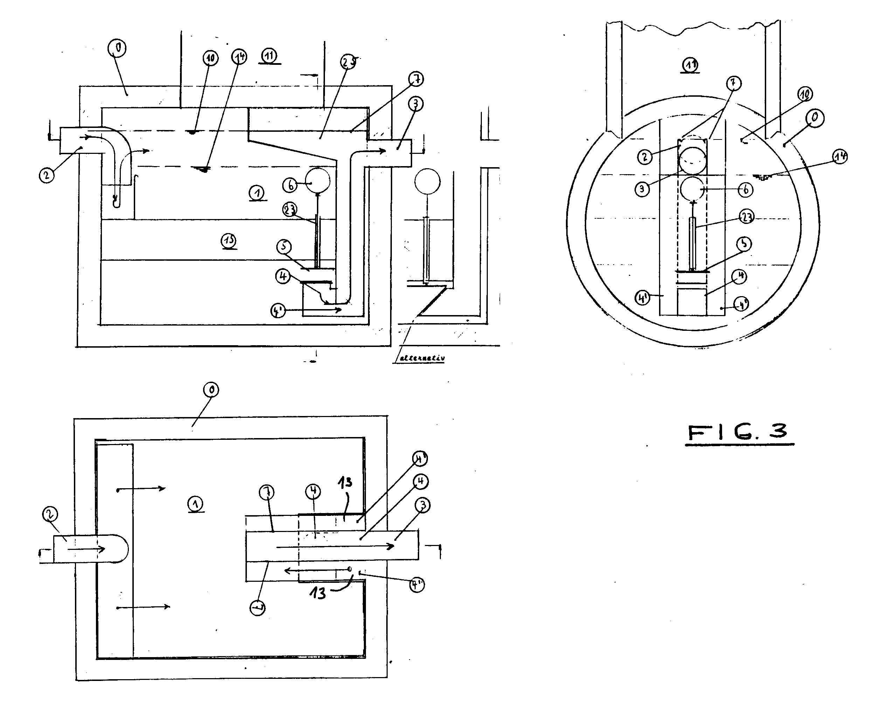

Figur 3 zeigt einen Abscheider, der die Form eines liegenden Zylinders besitzt und eine Betonhülle 0 mit einem Einstiegsschacht 11 aufweist. Wie bei der Ausführungsform der Figur 2 ist die Abscheidekammer mit einer Füllkörperschicht 15 gefüllt. Die Stange 23 des selbsttätigen Abschlusses ist wiederum mit Hilfe eines Rohres durch die Füllkörperschicht geführt. Der durch den selbsttätigen Abschluß 5 verschlossene Schwerflüssigkeitsablauf 4 aus der Abscheidekammer 1 ist hierbei so ausgebildet, daß er sich nach oben öffnet. Im geschlossenen Zustand des selbsttätigen Abschlusses 5 liegt somit die Abschlußklappe auf der Öffnung der Ablaufes 4 auf.

Die zusätzlichen Schwerflüssigkeitsabläufe bzw. Sicher heitsabläufe 4' sind wiederum beiderseits des Ablaufes 4 angeordnet und münden in spezielle Schwerflüssigkeitskammern 13, die mit entsprechenden verlängerten Überläufen 7 versehen sind. Die speziellen Schwerflüssigkeitskammern 13 weisen jeweils in ihrem oberen Bereich eine trichterförmige Erweiterung 25 auf. Die Überlaufkanten erstrecken sich somit über die gesamte Länge der Kammern von deren in der Figur linken Ende bis zum rechten Ende. Dadurch wird ein entsprechender Effekt wie bei der Ausführungsform der Figur 2 erzielt. Im Schnitt A-A der Figur 3 ist der höchstmögliche äußere Schwerflüssigkeitsspiegel bei 10 und der Schwerflüssigkeitsspiegel im Ruhezustand bei 14 angedeutet.

Eine Alternative in bezug auf die Ausführungsform des selbsttätigen Abschlusses ist neben dem Schnitt A-A der Figur 3 dargestellt. Hierbei ist die Abschlußklappe an einem Ende gelenkig an der Trennwand zwischen der Abscheidekammer 1 und der Vorkammer gelagert, und der Schwerflüssigkeitsablauf 4 aus der Abscheidekammer 1 besitzt eine abgeschrägte Mündung, gegen die sich die Klappe im abgesenkten Zustand des Schwimmers 6 legt.

Die vorstehend beschriebenen Ausführungsformen von Leichtflüssigkeitsabscheidern bestizen keinen selbsttätig wirkenden Leichtflüssigkeitsablauf und werden durch periodisches Abpumpen bzw. Absaugen der in der Abscheidekammer gebildeten Leichtflüssigkeitsschicht entsorgt. Sie können jedoch ebenfalls mit einem selbsttätig wirkenden Leichtflüssigkeitsablauf versehen sein. Hierbei dienen dann der selbsttätige Abschluß für den Schwerflüssigkeitsablauf und die zusätzlichen Schwerflüssigkeitsabläufe als zusätzliche Sicherungsmaßnahmen, wenn Störungen, beispielsweise Blockierungen, des selbsttätigen Schwerflüssigkeitsablaufes auftreten sollten. Jedenfalls ist die Erfindung diesbezüglich keinerlei Beschränkungen unterworfen.

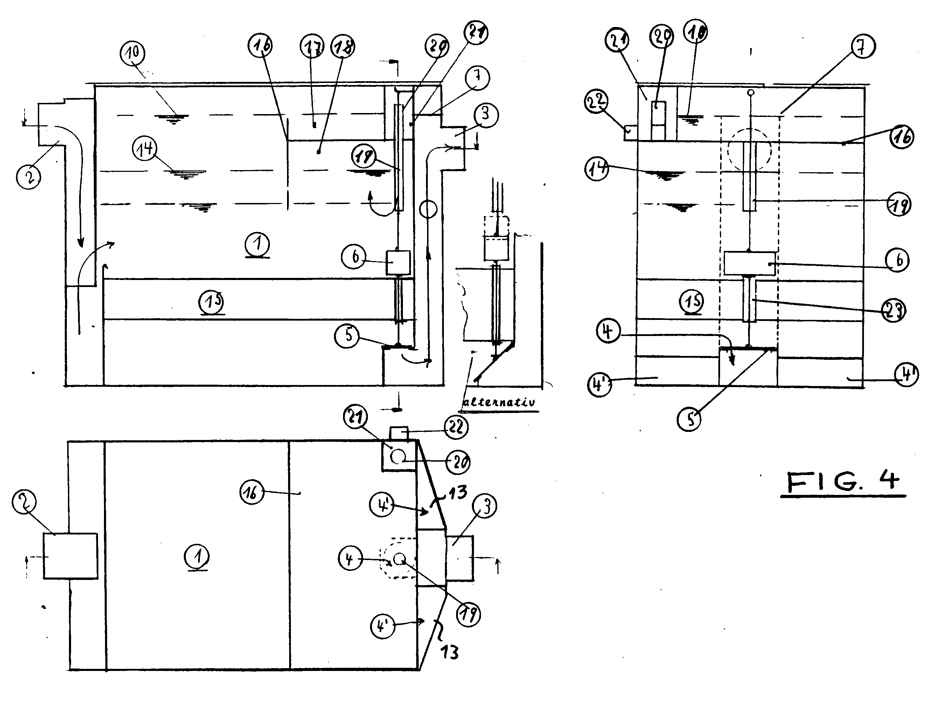

Figur 4 zeigt ein Ausführungsbeispiel eines Leichtflüssigkeitsabscheiders, der mit einem selbsttätig wirkenden Leichtflüssigkeitsablauf versehen ist. Man erkennt eine nach unten und oben offene Leichtflüssigkeitsauffangwanne 16, 17, 18 sowie ein Leichtflüssigkeitsspeicherbecken 20, 21, 22 mit entsprechenden Zu- und Abläufen, die Bestandteile dieses selbsttätigen Leichtflüssigkeitsablaufes sind.

Der selbsttätige Abschluß 5 ist bei dieser Asuführungsform entsprechend der Ausführungsform der Figur 1 ausgebildet, d. h. er besitzt eine horizontal angeordnete Abschlußklappe, die sich auf einen nach oben in die Abscheidekammer 1 mündenden Schwerflüssigkeitsablauf 4 legt. Da bei dieser Ausführungsform sich die Wanne 16, 17, 18 des selbsttätig wirkenden Leichtflüssigkeitsablaufes mit der unterhalb und oberhalb der Bodenwand der Wanne aufgebauten Leichtflüssigkeitssäule über dem selbsttätigen Abschluß 5 befindet, ist der Schwimmer 6 so ausgebildet, daß er nicht auf dem Schwerflüssigkeitsspiegel innerhalb der Abscheidekammer schwimmt, sondern in der Schwerflüssigkeit schwebt. Damit befindet sich der Schwimmer unterhalb der unter der Bodenwand der Wanne 16, 17, 18 aufgebauten Leichtflüssigkeitssäule. Die Aufhängung des Schwimmers erfolgt mit Hilfe eines Rohres 19, das sich durch die Leichtflüssigkeitssäule bis zum oberen Ende des Abscheiders erstreckt. Unterhalb des Schwimmers 6 befindet sich ein zweites Rohr, mit dem die Stange, an deren unterem Ende sich die Abschlußklappe befindet, die vorgesehene Füllkörperschicht 15 durchläuft.

Die neben dem Schnitt A-A gezeigte Alternative zeigt eine gelenkige Lagerung der Klappe des selbsttätigen Abschlusses 5 am unteren Ende der Trennwand zwischen Abscheidekammer 1 und der dem Schwerflüssigkeitsauslauf 3 vorgeordneten Vorkammer.

Da bei dieser Ausführungsform der selbsttätig wirkende Leichtflüssigkeitsablauf vorgesehen ist, erweitern sich die speziellen Schwerflüssigkeitskammern 13, in deren untere Enden die zusätzlichen Schwerflüssigkeitsabläufe 4' einmünden, nicht nach oben. Die entsprechenden Überläufe 7, die in die Vorkammer und dann zum Auslauf 3 führen, sind daher relativ kurz ausgebildet.

Zweckmäßigerweise sind das Führungsgestänge und die Schwimmeraufhängung nur so lang ausgebildet, wie für das Öffnen und Schließen des selbsttätigen Abschlusses erforderlich ist. Mit einem Anschlag oder einem entsprechenden Gelenk kann der Schwimmer unter dem verdrängten Schwerflüssigkeitsspiegel gehalten werden.

Wie die vorhergehenden Beispiele 2 bis 4 zeigen, ist die Aufhängung der Abschlußklappe des selbsttätigen Abschlusses durch ein Rohr 23 geführt, das im Bereich des Füllkörperraumes die Füllkörper von der Aufhängung abhält. Bei den Ausführungsformen der Figuren 3 und 4 ist der Schwimmer in den verdrängten Schwerflüssigkeitsspiegel eingetaucht, so daß bei geöffneter Abschlußklappe das untere Ende des Rohres 23 abgedeckt und eine Durchströmung mit ungereinigter Schwerflüssigkeit verhindert wird.

Wie Figur 2 zeigt, kann die Abscheidekammer an ihrem unteren Ende mit einer schiefen Ebene versehen sein, die wahlweise auch um 90° versetzt sein kann.

Der verlängerte Überlauf (Schleusenablauf) kann je nach Bedarf ein- oder doppelseitig, kürzer oder länger ausgebildet sein.

Der vorstehend erwähnte, selbsttätig wirkende Leichtflüssigkeitsablauf ist als solcher bekannt und beispielsweise in der DE-OS 33 03 632 bzw. der EP-A 118 021 beschrieben. Von einem derartigen selbsttätigen Leichtflüssigkeitsablauf existieren zwei Typen, nämlich ein einfach wirkender Ablauf mit Ablaufwirkung von unten und ein doppelt wirkender Ablauf mit Ablaufwirkung von oben und unten. Die vorliegende Erfindung bezieht sich auf Kombinationen eines selbsttätigen Abschlusses für den Schwerflüssigkeitsablauf mit den kennzeichnenden Merkmalen des Patentanspruchs 1 sowie den Merkmalen der Unteransprüche mit einem solchen selbsttätig wirkenden Leichtflüssigkeitsablauf der in den genannten Veröffentlichungen beschriebenen Art.

Der bekannte selbsttätig wirkende Leichtflüssigkeitsablauf funktioniert so, daß durch eine in einer Ablaufschleusenwand des Schwerflüssigkeitsablaufes angeordnete kleine Öffnung künstliche Schwerflüssigkeitsspiegelschwankungen erzeugt werden, die aufgrund des sich dadurch periodisch hebenden und senkenden Schwerflüssigkeitsspiegels die entsprechende Leichtflüssigkeitssäule über den Leichtflüssigkeitsablauf abströmen lassen. Die Anordnung einer derartigen Öffnung in der Schwerflüssigkeitsablaufschleusenwandist ebenfalls bekannt und in den vorstehend genannten Veröffentlichungen beschrieben. Die vorliegende Erfindung bezieht sich auch auf Kombinationen der in Verbindung mit dem selbsttätigen Abschluß für den Schwerflüssigkeitsablauf beanspruchten Merkmale mit einem selbsttätig wirkenden Leichtflüssigkeitsablauf der vorstehend wiedergegebenen Art und der entsprechenden Öffnung in der Ablaufschleusenwand für die Schwerflüssigkeit.

Bei einer speziellen Ausführungsform der Erfindung ist diese kleine Öffnung in dem erfindungsgemäß vorgesehenen Überlauf der von der Abscheidekammer getrennten Schwerflüssigkeitskammer vorgesehen. Bei einer Ausführungsform mit zwei Überläufen, die zu beiden Seiten des Schwerflüssigkeitsauslaufes angeordnet sind, können entweder ein Überlauf oder beide Überläufe mit einer entsprechenden kleinen Öffnung versehen sein. Durch diese Öffnung bzw. Öffnungen wird somit die Schwerflüssigkeitssäule in der Schwerflüssigkeitskammer bzw. in beiden Schwerflüssigkeitskammern gesteuert, wobei durch die entsprechende Schwerflüssigkeitsspiegelschwankung beim Ablauf der Schwerflüssigkeit durch die Öffnung der Leichtflüssigkeitsablauf in Funktion gesetzt wird.

In weiterer Ausgestaltung der Erfindung ist diese kleine Öffnung nunmehr derart hoch an einer Schleusenwand im Bereich des Auslaufes bzw. am Überlauf angeordnet, daß der Schwerflüssigkeitsspiegel in der Schwerflüssigkeitskammer hierdurch soweit absinkt, daß durch die höhere Flüssigkeitssäule in der Abscheidekammer der selbsttätige Abschluß für den Schwerflüssigkeitsablauf wieder aufgedrückt, d. h. geöffnet wird. Mit anderen Worten, die kleine Öffnung besitzt eine solche Höhe in dem zum Auslauf führenden Überlauf, daß der sich am unteren Rand der kleinen Öffnung einstellende tiefste Schwerflüssigkeitsspiegel in der Schwerflüssigkeitskammer ein Öffnen des selbsttätigen Abschlusses bewirkt. Demnach wird bei dieser Ausführungsform des erfindungsgemäß ausgebildeten Leichtflüssigkeitsabscheiders durch das in der Schwerflüssigkeitskammer permanent schwankende Schwerflüssigkeitsniveau der selbsttätige Abschluß immer wieder geöffnet und wieder geschlossen, so daß im Ruhezustand des Abscheiders, wenn sich der Schwerflüssigkeitsspiegel in der Schwerflüssigkeitskammer am unteren Rand der kleinen Öffnung eingepegelt hat, bei einem plötzlich auftretenden sehr großen Gemischzulauf in die Abscheidekammer eine relativ große Querschnittsfläche für den Schwerflüssigkeitsablauf zur Verfügung steht, die durch den mit dem selbsttätigen Abschluß versehenen Schwerflüssigkeitsablauf und den immer offenen Schwerflüssigkeitsablauf gebildet wird.

Die Funktionsweise dieser Ausführungsform sei wie folgt beschrieben:

Wenn sich in der eigentlichen Abscheidekammer eine entsprechend hohe Leichtflüssigkeitssäule ausgebildet hat, schließt der selbsttätige Abschluß, da sein Schwebekörper absinkt. In diesem Zustand läuft die Schwerflüssigkeit noch über den immer offenen Schwerflüssigkeitsablauf ab und strömt dabei über den Überlauf. Wenn kein Gemischzulauf mehr eintritt, sinkt der Schwerflüssigkeitsspiegel in der mit dem Überlauf versehenen Schwerflüssigkeitskammer allmählich ab, da die Schwerflüssigkeit durch die kleine Öffnung abströmt. Durch die absinkende Schwerflüssigkeitssäule in der Schwerflüssigkeitskammer, die über den immer offenen Schwerflüssigkeitsablauf mit der Abscheidekammer in Verbindung steht, findet in beiden Kammern ein entsprechender Säulenausgleich statt, wobei durch diesen Effekt der Schwebekörper des selbsttätigen Abschlusses nach oben bewegt und somit der Abschluß geöffnet wird. Im sich dann einstellenden Ruhezustand des Abscheiders ist somit der selbsttätige Abschluß geöffnet. Läuft dann wieder neues Gemisch zu, baut sich in der Abscheidekammer eine entsprechend höhere Leichtflüssigkeitssäule auf, die wieder ein Schließen des selbsttätigen Abschlusses bewirkt.

**Patentansprüche**

1. Leichtflüssigkeitsabscheider mit einem Zulauf für ein Leichtflüssigkeits/Schwerflüssigkeitsgemisch, einer Abscheidekammer zur Trennung des Gemisches, einem in einen Auslauf führenden Ablauf für die Schwerflüssigkeit und einem selbsttätigen Abschluß für den Schwerflüssigkeitsablauf, der sich schließt, wenn der Schwerflüssigkeitsspiegel in der Abscheidekammer ein bestimmtes Niveau unterschreitet, dadurch gekennzeichnet, daß die Abscheidekammer (1) in ihrem unteren Bereich einen zusätzlichen, immer offenen Schwerflüssigkeitsablauf (4') aufweist, der in eine mit einem zum Auslauf (3) führenden Überlauf (7) versehene, von der Abscheidekammer (1) getrennte Schwerflüssigkeitskammer (13) mündet.

2. Leichtflüssigkeitsabscheider nach Anspruch 1, dadurch gekennzeichnet, daß der Überlauf (7) so hoch angeordnet ist, daß die auf der Schwerflüssigkeit in der Abscheidekammer (1) befindliche Leichtflüssigkeit (8) noch von der Abscheidekammer (1) aufgenommen wird.

3. Leichtflüssigkeitsabscheider nach Anspruch 1 oder 2, dadurch gekennzeichnet, daß er keinen Leichtflüssigkeitsablauf aufweist und die Leichtflüssigkeit periodisch abgesaugt bzw. abgepumpt wird.

4. Leichtflüssigkeitsabscheider nach Anspruch 1 oder 2, dadurch gekennzeichnet, daß er einen selbsttätig wirkenden Leichtflüssigkeitsablauf (16, 17, 18, 20, 21, 22) aufweist und daß der zusätzliche Schwerflüssigkeitsablauf (4') als Sicherheitsablauf bei Störungen des Leichtflüssigkeitsablaufs dient.

5. Leichtflüssigkeitsabscheider nach einem der vorangehenden Ansprüche, dadurch gekennzeichnet, daß der zusätzliche Schwerflüssigkeitsablauf (4') tiefer als der selbsttätige Abschluß (5) angeordnet ist.

6. Leichtflüssigkeitsabscheider nach einem der vorangehenden Ansprüche, dadurch gekennzeichnet, daß sich die Schwerflüssigkeitskammer (13) nach oben erweitert (bei 25) und einen verlängerten Überlauf (7) aufweist.

7. Leichtflüssigkeitsabscheider nach einem der vorangehenden Ansprüche, dadurch gekennzeichnet, daß der Überlauf (7) oberhalb des Auslaufes (3) für die Schwerflüssigkeit angeordnet ist.

8. Leichtflüssigkeitsabscheider nach einem der vorangehenden Ansprüche, dadurch gekennzeichnet, daß er zwei zusätzliche Schwerflüssigkeitsabläufe (4') aufweist, die mit ihren Schwerflüssigkeitskammern (13) und Überläufen (7) beiderseits des mit dem selbsttätigen Abschluß (5) versehenen Schwerflüssigkeitsablaufes (4) angeordnet sind.

9. Leichtflüssigkeitsabscheider nach einem der vorangehenden Ansprüche, dadurch gekennzeichnet, daß der selbst tätige Abschluß (5) eine die Schwerflüssigkeitsablaufmündung verschließende Abschlußklappe aufweist, die über eine Stange an einem Schwimmer (6) hängt.

10. Leichtflüssigkeitsabscheider nach Anspruch 9, dadurch gekennzeichnet, daß die Abschlußklappe einseitig gelenkig gelagert ist und durch Verschwenken die Schwerflüssigkeitsablaufmündung schließt bzw. öffnet.

11. Leichtflüssigkeitsabscheider nach Anspruch 9 oder 10, dadurch gekennzeichnet, daß die Stange mit Hilfe eines Rohres (23) durch eine in der Abscheidekammer (1) befindliche Füllkörperschicht (15) geführt ist.

12. Leichtflüssigkeitsabscheider nach Anspruch 4, dadurch gekennzeichnet, daß der Schwimmer (6) aufgehängt ist und daß die Schwimmeraufhängung mit Hilfe eines Rohres (19) durch die in der Abscheidekammer (1) aufgebaute Leichtflüssigkeitssäule geführt ist.

13. Leichtflüssigkeitsabscheider nach einem der vorangehenden Ansprüche, dadurch gekennzeichnet, daß die Schwerflüssigkeitskammer (13) als Schacht bzw. Rohr ausgebildet ist.

14. Leichtflüssigkeitsabscheider nach einem der Ansprüche 9 bis 12, dadurch gekennzeichnet, daß der Schwimmer unter der Grenzlinie Leichtflüssigkeit/Schwerflüssigkeit in die Schwerflüssigkeit eingetaucht ist und durch Anschläge gehalten ist.

15. Leichtflüssigkeitsabscheider nach Anspruch 11, dadurch gekennzeichnet, daß bei geöffnetem selbsttätigem Abschluß (5) das Füllkörperdurchführungsrohr (23) unten von der Abschlußklappe und bei geschlossenem selbsttätigem Abschluß (5) oben durch eine unter dem Schwimmer angeordnete Platte abgedeckt wird, um eine Durchströmung des Rohres (23) mit Flüssigkeitsgemisch zu verhindern.

16. Leichtflüssigkeitsabscheider nach einem der vorangehenden Ansprüche, dadurch gekennzeichnet, daß ein Zulaufsumpf vorgesehen ist, um eine Rückfluß der Leichtflüssigkeit in den Zulauf zu verhindern.

17. Leichtflüssigkeitsabscheider nach einem der Ansprüche 4 bis 16, dadurch gekennzeichnet, daß er zusätzlich zu dem selbsttätig wirkenden Leichtflüssigkeitsablauf (16, 17, 18, 20, 21) eine kleine Öffnung in dem zum Auslauf (3) führenden Überlauf (7) aufweist.

18. Leichtflüssigkeitsabscheider nach Anspruch 17, dadurch gekennzeichnet, daß die kleine Öffnung in einer solchen Höhe im Überlauf (7) angeordnet ist, daß durch den sich am unteren Rand der Öffnung einstellenden tiefsten Schwerflüssigkeitsspiegel der selbsttätige Abschluß (5) aufgedrückt wird.

## Claims

1. A light liquid separator comprising an inlet for a light liquid/heavy liquid mixture, a separator chamber for the separation of the mixture, a discharge opening for the heavy liquid leading into an outlet and an automatic closure for the heavy liquid discharge opening which closes if the heavy liquid level in the separator chamber falls below a definite level, characterized in that the separator chamber (1) has in its lower region an additional heavy liquid discharge opening (4') which is always open and which opens into a heavy liquid chamber (13) separated from the separator chamber (1) and provided with an overflow (7) leading to the outlet (3).

2. The light liquid separator according to claim 1, characterized in that the overflow (7) is located so high that the light liquid (8) located on the heavy liquid in the separator chamber (1) is still received by the separator chamber (1).

3. The light liquid separator according to claim 1 or 2, characterized in that it has no light liquid discharge means and that the light liquid is periodically sucked or pumped off.

4. The light liquid separator according to claim 1 or 2, characterized in that it has an independently functioning light liquid discharge means (16, 17, 18, 20, 21, 22) and that the additional heavy liquid discharge opening (4') serves as safety discharge means if the light liquid discharge means is disturbed.

5. The light liquid separator according to one of the preceding claims, characterized in that the additional light liquid discharge opening (4') is located at a lower position than the automatic closure (5).

6. The light liquid separator according to one of the preceding claims, characterized in that the heavy liquid chamber (13) enlarges upwardly (at 25) and has an extended overflow (7).

7. The light liquid separator according to one of the preceding claims, characterized in that the overflow (7) is located above the outlet (3) for the heavy liquid.

8. The light liquid separator according to one of the preceding claims, characterized in that it includes two additional heavy liquid discharge openings (4') which, with their heavy liquid chambers (13) and overflows (7), are located on both sides of the heavy liquid discharge opening (4) provided with the automatic closure (5).

9. The light liquid separator according to one of the preceding claims, characterized in that the automatic closure (5) has a closure flap closing the heavy liquid discharge opening and suspended at a float (6) by means of a rod.

10. The light liquid separator according to claim 9, characterized in that the closure flap is pivotally supported on one side and closes or opens the heavy liquid discharge opening by tilting.

11. The light liquid separator according to claim 9 or 10, characterized in that the rod passes through a packing layer (15) in the separator chamber (1) by means of a tube (23).

12. The light liquid separator according to claim 4, characterized in that the float (6) is suspended and that the float suspension passes through the light liquid column located in the separator chamber (1) by means of a tube (19).

13. The light liquid separator according to one of the preceding claims, characterized in that the heavy liquid chamber (13) is formed as well or tube.

14. The light liquid separator according to one of the claims 9 to 12, characterized in that the float is dipped under the border line between the light liquid/heavy liquid and is held by stops.

15. The light liquid separator according to claim 11, characterized in that the packing passage tube (23) is covered below by the closure flap when the automatic closure is opened and is covered above by a plate located below the float when the automatic closure (5) is closed in order to prevent that the liquid mixture flows through the tube (23).

16. The light liquid separator according to one of the preceding claims, characterized in that an inlet sump is provided in order to prevent reflux of the light liquid into the inlet.

17. The light liquid separator according to one of the claims 4 to 16, characterized in that it has a small opening in the overflow (7) leading to the outlet (3) in addition to the automatic light liquid discharge means (16, 17, 18, 20, 21).

18. The light liquid separator according to claim 17, characterized in that the small opening is located in such a height in the overflow (7) that the automatic closure (5) is pushed open by the lowest heavy liquid level forming at the lower edge of the opening.

**Revendications**

1. Séparateur de liquide léger, avec amenée pour un mélange de liquide léger et de liquide lourd, chambre de séparation destinée à la séparation du mélange, écoulement de liquide lourd conduisant dans une décharge et fermeture automatique de l'écoulement de liquide lourd, qui se ferme lorsque le niveau du liquide lourd dans la chambre de séparation descend en dessous d'un certain niveau, **caractérisé en ce que** la chambre de séparation (1) présente dans sa partie inférieure un écoulement de liquide lourd supplémentaire et toujours ouvert (4'), qui débouche dans une chambre (13) de liquide lourd séparée de la chambre de séparation (1) et munie d'une surverse (7) conduisant dans la décharge (3).

2. Séparateur de liquide léger selon la revendication 1, **caractérisé en ce que** la surverse (7) est disposée à une hauteur telle que le liquide léger (8) se trouvant dans la chambre de séparation (1) au-dessus du liquide lourd est encore repris par la chambre de séparation (1).

3. Séparateur de liquide léger selon la revendication 1 ou 2, **caractérisé en ce qu'**il ne présente pas d'écoulement de liquide léger et en ce que le liquide léger est aspiré ou pompé périodiquement.

4. Séparateur de liquide léger selon la revendication 1 ou 2, **caractérisé en ce qu'**il présente un écoulement de liquide léger (16, 17, 18, 20, 21), 22) fonctionnant automatiquement et en ce que l'écoulement supplémentaire de liquide lourd (4') sert d'écoulement de sécurité en cas de panne de l'écoulement de liquide léger.

5. Séparateur de liquide léger selon l'une des revendications précédentes, **caractérisé en ce que** l'écoulement supplémentaire de liquide lourd (4') est disposé en position plus basse que la fermeture automatique (5).

6. Séparateur de liquide léger selon l'une des revendications précédentes, **caractérisé en ce que** la chambre de liquide lourd (13) s'élargit vers le haut (en 25) et présente une surverse (7) prolongée.

7. Séparateur de liquide léger selon l'une des revendications précédentes, **caractérisé en ce que** la surverse 7 est disposée au dessus de la décharge (3) de liquide lourd.

8. Séparateur de liquide léger selon l'une des revendications précédentes, **caractérisé en qu'**il présente deux écoulements supplémentaires de liquide lourd (4') dont les chambres à liquide lourd (13) et les surverses (7) sont disposées des deux côtés de l'écoulement de liquide lourd (4) muni de la fermeture automatique (5).

9. Séparateur de liquide léger selon l'une des revendications précédentes, **caractérisé en ce que** la fermeture automatique (5) présente un clapet de fermeture fermant l'embouchure de l'écoulement de liquide lourd, ce clapet étant suspendu à un flotteur 6) par l'intermédiaire d'une tige.

10. Séparateur de liquide léger colon la revendication 9, **caractérisé en ce que** le clapet de fermeture est fixé à rotation à pivotement d'un côté et se ferme ou s'ouvre par balayage horizontal de l'embouchure de l'écoulement de liquide lourd.

11. Séparateur de liquide léger selon la revendication 9 ou 10, **caractérisé en ce que** la tige est guidée à l'aide d'un tube (23) traversant une couche remplie (15) du corps située dans la chambre de séparation (1).

12. Séparateur de liquide léger selon la revendication 4, **caractérisé en ce que** le flotteur (6) est suspendu et en ce que la suspension du flotteur est guidée à l'aide d'un tube (19) à travers le niveau de liquide léger accumulé dans la chambre de séparation (1).

13. Séparateur de liquide léger selon l'une des revendications précédentes, **caractérisé en ce que** la chambre de liquide lourd (13) est réalisée sous la forme d'une gaine ou d'un tube.

14. Séparateur de liquide léger selon l'une des revendications 9 à 12. **caractérisé en ce que** le flotteur est plongé dans le liquide lourd, en dessous de la ligne de séparation entre le liquide léger et le liquide lourd, et est maintenu par des butées.

15. Séparateur de liquide léger selon la revendication 11, **caractérisé en ce que** lorsque la fermeture (5) automatique est formée le tube (23) de traversée du corps de remplissage est recouvert par le bas par le clapet de fermeture, et lorsque la fermeture (5) automatique est fermée est recouvert par le haut par une plaque disposée sous le flotteur, pour empêcher l'écoulement par le tube 23 d'un mélange de liquide.

16. Séparateur de liquide léger selon l'une des revendications précédentes, **caractérisé par** la présence d'un réservoir tampon d'amenée destiné à empêcher un retour de liquide léger dans l'amenée.

17. Séparateur de liquide léger selon l'une des revendications 4 à 16. **caractérisé en ce qu'**il présente, en plus de l'écoulement de liquide léger à fonctionnement automatique (16, 17, 18, 20, 21), une petite ouverture dans la surverse (7) conduisant à la décharge (3).

18. Séparateur de liquide léger selon la revendication 17, **caractérisé en ce que** la petite ouverture est disposée dans la surverse (7) à une hauteur telle que la fermeture automatique (5) est comprimée par le plus bas niveau de liquide lourd s'établissant sur le bord inférieur de l'ouverture.

FIG. 1

FIG. 2

EP 0 276 861 B1

EP 0 276 861 B1

FIG. 3

13

FIG. 4